# EUROPEAN PATENT APPLICATION

(11) **EP 3 832 837 A1**
(43) Date of publication of application: **09.06.2021**
(21) Application number: 19844529.8
(22) Date of filing: 24.07.2019
(51) Int. Cl.: H02J 7/00, B60L 53/10, H02J 3/14, H02J 7/02

(54) **INDUSTRIAL VEHICLE CHARGING SYSTEM**

(30) Priority: 31.07.2018 JP 2018143926
(71) Applicant: Kabushiki Kaisha Toyota Jidoshokki, Kariya-shi, Aichi 448-8671 (JP)
(72) Inventor: IWATA, Yasuki, Kariya-shi, Aichi 448-8671 (JP); MORI, Shogo, Kariya-shi, Aichi 448-8671 (JP); ISHIHARA, Yoshiaki, Kariya-shi, Aichi 448-8671 (JP)
(74) Representative: TBK
(86) International application number: PCT/JP2019/028927
(87) International publication number: WO 2020/026900

(57) **Abstract**

A management device (60) has a management device storage (65) that stores a charge schedule of forklifts (51, 52, 53) and an operation load until the next charge, and a required charge amount calculator (66) that calculates a required charge amount of the forklifts (51, 52, 53) connected to corresponding chargers (31, 32, 33) on the basis of the charge schedule, the operation load, and charge information. A charge controller (40) has a charge power value calculator (46) that calculates a value of charge power which is transmitted to each of the chargers (31, 32, 33) on the basis of a required charge amount and at least one of contracted power, installed capacity, or an available power.

## Description

### TECHNICAL FIELD

The present invention relates to an industrial vehicle charging system.

### BACKGROUND ART

The Patent Document 1 discloses a charging and power feeding management device of mobile objects that obtains identification information of a mobile object connected to a recharger of the plurality of mobile objects, a battery state such as current power remaining, and information of the mobile object such as the next scheduled operation time to make a charging and power feeding schedule of the mobile body. The charging and power feeding device controls charge and discharge of a secondary battery mounted on the mobile object in accordance with the charging and power feeding schedule. In addition, the charging and power feeding management device is supposed to set a peak cut mode ON in response to determining that peak power is over contracted power.

### Citation List

### Patent Document

Patent Document 1: Japanese Patent Application Publication No. 2013-172488

### SUMMARY OF INVENTION

### Technical Problem

An industrial vehicle charging system that has a plurality of chargers connected to a grid power supply, when the industrial vehicle charging system charges a plurality of industrial vehicles at the same time, determines a charge amount of each industrial vehicle in such a manner that peak power is cut so that the peak power does not exceed a specified value. However, it is considered that only by the cutting of the peak power, the industrial vehicles after the charge has not been appropriately charged at an operation start time.

It is an objective of the present invention to provide an industrial vehicle charging system that appropriately charges industrial vehicles.

### Solution to Problem

An industrial vehicle charging system to solve the above problem includes a plurality of chargers connected to a grid power supply, a charge controller configured to instruct each of the plurality of the chargers on a value of charge power, and a management device configured to receive, via the charge controller, charge information of an industrial vehicle connected to each of the chargers. The chargers each have a communication unit that receives the charge information of the industrial vehicle connected to the charger, and transmits the charge information to the charge controller. The management device has a storage that stores a charge schedule of the industrial vehicles and an operation load until the next charge, and a required charge amount calculator that calculates a required charge amount of the industrial vehicle connected to each of the chargers on the basis of the charge schedule, the operation load, and the charge information. The charge controller has a charge power value calculator that calculates the value of the charge power which is transmitted to each of the chargers on the basis of the required charge amount and at least one of contracted power, installed capacity, or available power.

With this configuration, the required charge amount of the industrial vehicle connected to each of the chargers is calculated by the required charge amount calculator on the basis of the charge schedule, the operation load, and the charge information. The value of the charge power which is transmitted to each of the chargers is calculated by the charge power value calculator on the basis of the required charge amount and at least one of the contracted power, the installed capacity, or the available power. Thus, the industrial vehicle charging system collectively manages the lower level charge controllers by using the upper level management device, and calculates the value of the charge power in accordance with the operation load, so that the industrial vehicle charging system may appropriately charge the industrial vehicles.

In the industrial vehicle charging system, preferably, the charge controller further includes an available power calculator that calculates available power in the chargers.

In addition, in the industrial vehicle charging system, preferably, the charge controller further includes a chargeable time calculator that calculates a chargeable time of each of the chargers, and calculates the value of the charge power that is transmitted to the charger on the basis of the chargeable time.

### Advantageous Effects of Invention

According to the present invention, industrial vehicles are appropriately charged.

### BRIEF DESCRIPTION OF DRAWINGS

FIG. 1 is a block diagram illustrating a configuration of an industrial vehicle charging system according to an embodiment of the present invention.
FIG. 2 is a block diagram illustrating a configuration of the industrial vehicle charging system.
FIG. 3 is a block diagram illustrating a configuration of the industrial vehicle charging system.
FIG. 4 is a side view of a forklift.
FIG. 5 is an explanatory view of charge information.
FIG. 6 is an explanatory view of operation information.
FIG. 7 is an explanatory view of a relationship between an operation load and actual power consumption.
FIG. 8 is an explanatory view of available power.
FIG. 9 is an explanatory view of an amount of power at a charge time.
FIG. 10 is a flowchart of a control.
FIG. 11 is a flowchart of the control.
FIG. 12 is an explanatory view of an amount of power at a charge time.
FIG. 13 is an explanatory view of an amount of the power at the charge time.
FIG. 14 is an explanatory view of an amount of the power at the charge time.

### DESCRIPTION OF EMBODIMENTS

The following will describe an embodiment that embodies the present invention with reference to the accompany drawings.

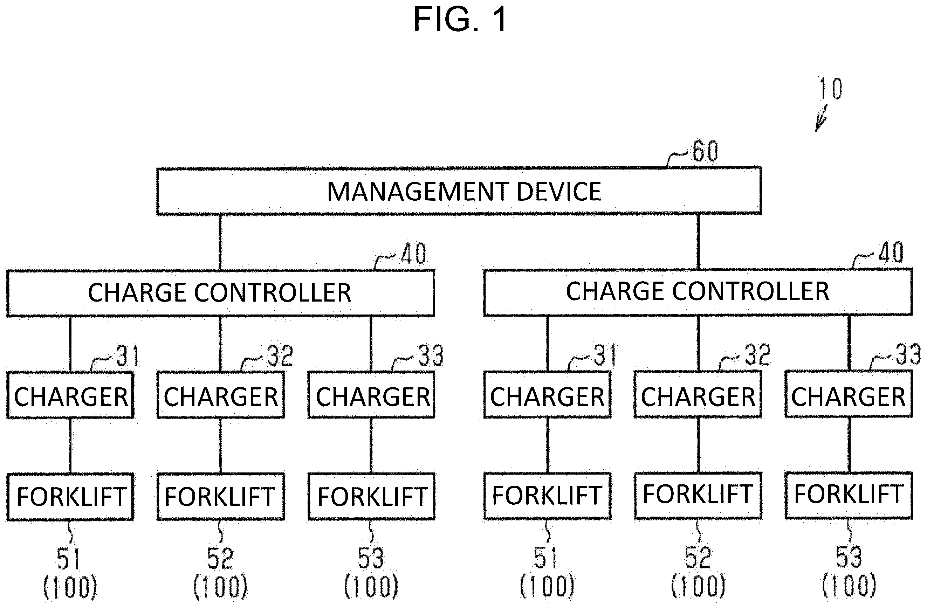

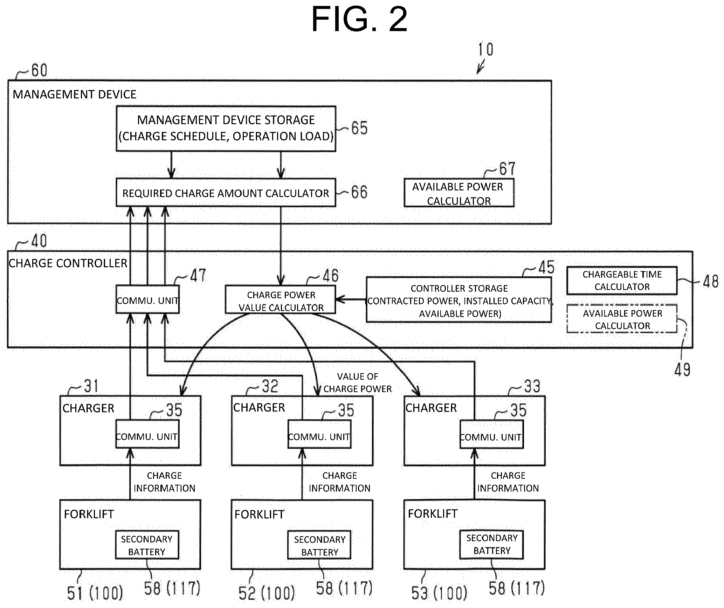

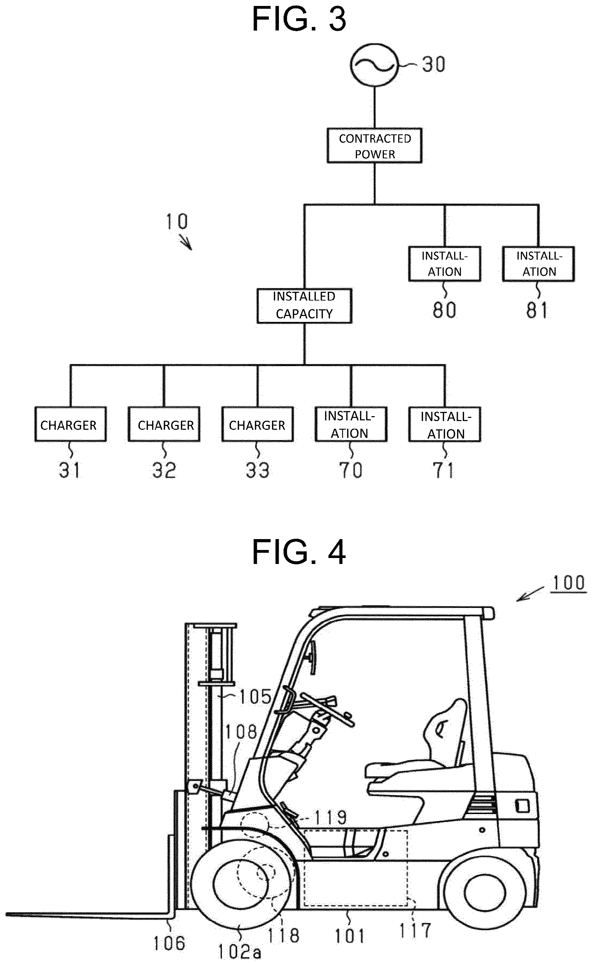

As illustrated in FIGS. 1, 2, and 3, an industrial vehicle charging system 10 includes a plurality of chargers 31, 32, and 33 connected to a grid power supply 30 (see FIG. 3). Forklifts 51,52, and 53 (see FIGS. 1 and 2) as industrial vehicles are connected to the chargers 31, 32, and 33, respectively.

In the present embodiment, the forklifts 51, 52, and 53 that are electrically operated correspond to the industrial vehicles. That is, as illustrated in FIG. 4, a forklift 100 is a battery forklift that performs a transporting work and a load-handling work.

A battery 117, a traveling motor (electric motor for traveling) 118, and a load-handling motor (electric motor for load-handling) 119 are mounted on a vehicle body 101 of the forklift 100. The traveling motor 118 is driven by the battery 117, by which driving wheels 102a are driven. In detail, an output shaft of the traveling motor 118 is connected to a rotary shaft of the driving wheels 102a via a reducer. When the output shaft is rotated by the driving of the traveling motor 118, the rotary shaft of the driving wheels 102a is rotated along with the rotation of the output shaft, by which the driving wheels 102a are driven.

In addition, the load-handling motor 119 is driven by the battery 117, thereby driving a hydraulic pump (not illustrated). A lift cylinder 105 and a tilt cylinder 108 are extended and retracted in accordance with the driving of the hydraulic pump to move a fork 106 upward and downward and tilt the fork 106.

Thus, the battery 117 such as a lithium-ion secondary battery are mounted on the forklifts 51, 52, and 53. Each of the forklifts 51, 52, and 53 travels and performs load-handling operation by power of the battery 117 as the secondary battery.

As illustrated in FIG. 1, the industrial vehicle charging system 10 includes a plurality of charge controllers 40 and a management device 60. The management device 60 is a server which is connected to the plurality of charge controllers 40 through a network connection.

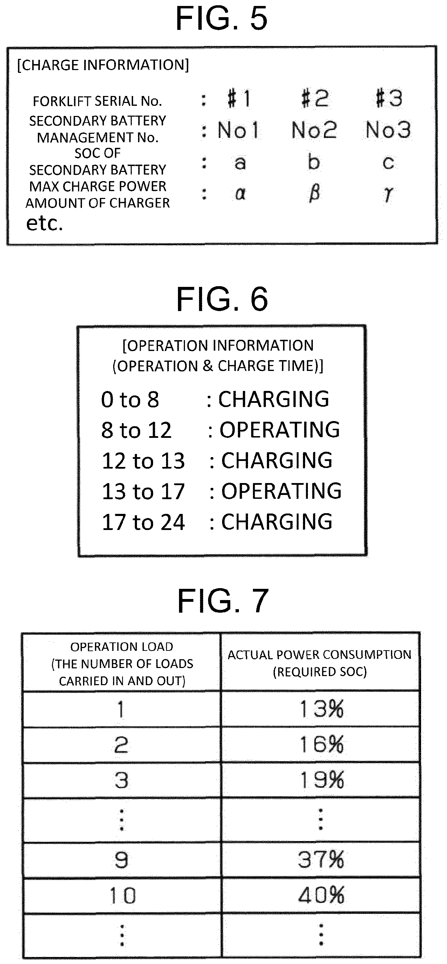

One charge controller 40 is configured to instruct each of the chargers 31, 32, and 33 on a value of charge power. The management device 60 is configured to receive, via the charge controller 40, charge information (see FIG. 5 described later) of the forklifts 51, 52, and 53 connected to the chargers 31, 32, and 33, respectively.

The industrial vehicle charging system 10 includes the upper level management device 60 for the lower level charge controllers 40. The upper level management device 60 collectively manages the lower level charge controllers 40, and manages the plurality of chargers 31, 32, and 33 connected to each of the charge controllers 40. That is, information is not stored and analyzed by the charge controllers 40 but by the management device 60. The management device 60 provides the information to the charge controllers 40, and the charge controllers 40 control power. This means that the charge information is transmitted to one charge controller 40, the management device 60 receives the charge information from the charge controller 40, the management device 60 puts the charge information into a database and retains operation information (an operation time, a quantity of loads, etc.), the management device 60 feeds a required charge amount to the charge controller 40, and the charge controller 40 instructs each of the chargers 31, 32, and 33 on a value of charge power on the basis of information about contracted power, installed capacity, and available power.

As illustrated in FIG. 2, each of the charge controllers 40 has a communication unit 47. Each of the chargers 31, 32, and 33 has a communication unit 35. The communication unit 35 of each of the chargers 31, 32, and 33 is connected to the communication unit 47 of the charge controller 40. The management device 60 is connected to the communication unit 47 of the charge controller 40.

The communication unit 35 of each of the chargers 31, 32 and 33 receives charge information (current SOC, identification information, etc.) from the corresponding one of the forklifts 51, 52, and 53 connected to the chargers 31, 32, and 33, and transmits the charge information to one charge controller 40. Then, the charge information (current SOC, identification information, etc.) are transmitted to the management device 60 via the communication unit 47.

FIG. 5 shows an example of the charge information. In FIG. 5, the charge information includes serial numbers of the forklifts, secondary battery management numbers, SOCs (states of charge) of the secondary batteries, the maximum values of charge power of the chargers, and the like. Specifically, in the example of FIG. 5, the serial numbers are shown by #1, #2, and #3, the secondary battery management numbers are shown by No. 1, No. 2, and No. 3, the SOCs of the secondary batteries are shown by a%, b%, and c%, and the maximum values of the charge power of the chargers are shown by α, β, γ.

The management device 60 of FIG. 2 has a management device storage 65 as a storage and a required charge amount calculator 66. The management device storage 65 stores a charge schedule of the forklifts 51, 52, and 53 (see FIG. 6 described later) and an operation load until the next charge (see FIG. 7 described later).

FIG. 6 shows an example of the charge schedule. In FIG. 6, the operation information includes an operation time and a charge time. Specifically, in the example of FIG. 6, a time from 0:00 to 8:00 is the charge time, a time from 8:00 to 12:00 is the operation time, a time from 12:00 to 13:00 is the charge time, a time from 13:00 to 17:00 is the operation time, and a time from 17:00 to 24:00 is the charge time.

The required charge amount calculator 66 of FIG. 2 calculates a required charge amount of the forklifts 51, 52, and 53 connected to the corresponding chargers 31, 32, and 33 on the basis of the charge schedule, the operation load, and the charge information.

In the management device 60, a relationship between the operation load and actual power consumption (amount of work done) as shown in FIG. 7 is determined in advance. Specifically, in an example of FIG. 7, the actual power consumption (required SOC) increases as the operation load (the number of loads which are carried in and out) increases. For example, when the operation load (the number of loads which are carried in and out) is "1", the actual power consumption (required SOC) is 13%. When the operation load (the number of loads which are carried in and out) is "2", the actual power consumption (required SOC) is 16%. When the operation load (the number of loads which are carried in and out) is "3", the actual power consumption (required SOC) is 19%. Thus, the operation load corresponds to the quantity of loads (or production volume).

The management device 60 stores data in which the operation load and the actual power consumption are correlated with each other, and calculates the required charge amount.

The charge controller 40 of FIG. 2 includes a controller storage 45 and a charge power value calculator 46. The controller storage 45 stores at least one of the contracted power, the installed capacity, or the available power. The charge power value calculator 46 calculates a value of the charge power which is transmitted to each of the chargers 31, 32, and 33 on the basis of the required charge amount and at least one of the contracted power, the installed capacity, or the available power.

The charge controller 40 has a chargeable time calculator 48. A chargeable time is herein a differential between a connection time at which the forklifts are connected to the chargers and the operation start time, and means an actual charge time for which the secondary batteries are actually charged. The chargeable time calculator 48 calculates the chargeable time for which the forklifts 51, 52, and 53 are charged by the chargers 31, 32, and 33, respectively. The charge controller 40 calculates a value of charge power which is transmitted to each of the chargers on the basis on the chargeable time.

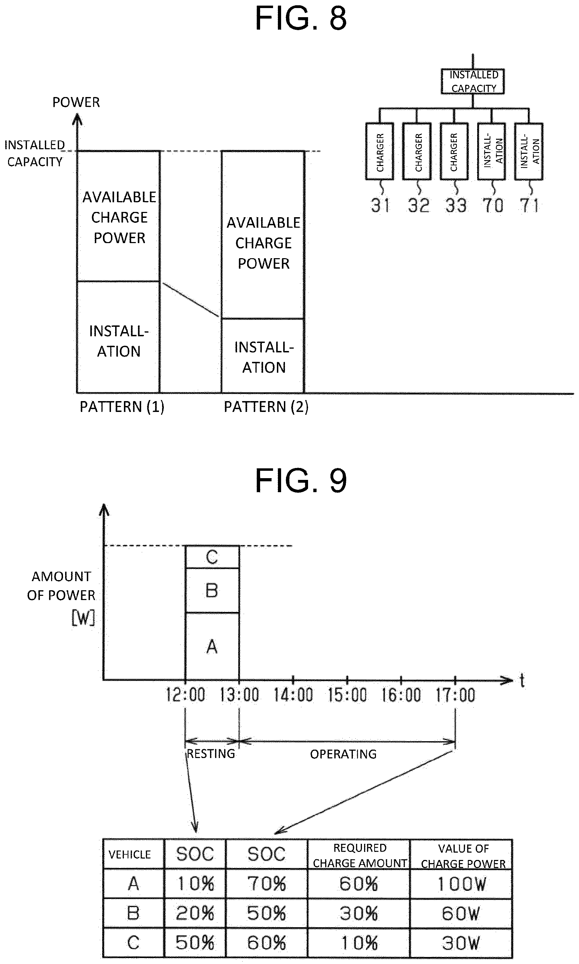

The management device 60 has an available power calculator 67. In the available power calculator 67, for example, as shown in FIG. 8, of installed capacity, power excluding power that is consumed by installations 70 and 71 is calculated as power (available power) which is available for the charge in the chargers 31, 32, 33. In FIG. 8, the power which is consumed by the installations 70 and 71 is larger in a pattern (1) than that in a pattern (2), and the available power which is used for the charge is lower in the pattern (1) than that in the pattern (2).

It is noted that while the installed capacity is explained by using FIG. 8, the contracted power (see FIG. 3) is also explained similarly to the installed capacity. In the available power calculator 67, of the contracted power of FIG. 3, power excluding power that is consumed by the installations 70, 71, 80, and 81 is calculated as the power (available power) which is available for charge in the chargers 31, 32, and 33.

The following will describe an operation of the industrial vehicle charging system 10.

As shown as an example in FIG. 5, the charge information includes the serial numbers of the forklifts, the secondary battery management numbers, the SOCs (states of charge) of the secondary batteries, the maximum values of charge power of the chargers, and the like. As shown as an example in FIG. 6, the operation information includes the operation time and the charge time. Specifically, in the example of FIG. 6, a time from 0:00 to 8:00 is the charge time, a time from 8:00 to 12:00 is the operation time, a time from 12:00 to 13:00 is the charge time, a time from 13:00 to 17:00 is the operation time, and a time from 17:00 to 24:00 is the charge time.

As shown in FIG. 9, a schedule for charge is determined. Specifically, in an example of FIG. 9, three forklifts are charged from 12:00 to 13:00, and operated from 13:00 to 17:00. A vehicle A has a SOC of 10 % before charged, a vehicle B has a SOC of 20 % before charged, and a vehicle C has a SOC of 50 % before charged. As illustrated as an example in FIG. 7, the relationship between the operation load and the actual power consumption is determined in advance.

In FIG. 9, the SOC of the vehicle A becomes 70% at 17:00 by the operation from 13:00 to 17:00 in view of the operation load with reference to FIG. 7. As a result, the required charge amount becomes 60%, and the value of charge power becomes 100 W in the vehicle A. Similarly to the vehicle A, the SOC of the vehicle B becomes 50% at 17:00 by the operation from 13:00 to 17:00 in view of the operation load with reference to FIG. 7. As a result, the required charge amount becomes 30%, and the value of charge power becomes 60 W in the vehicle B. The SOC of the vehicle C becomes 60% at 17:00 by the operation from 13:00 to 17:00 in view of the operation load with reference to FIG. 7. As a result, the required charge amount becomes 10%, and the value of charge power becomes 30 W in the vehicle C.

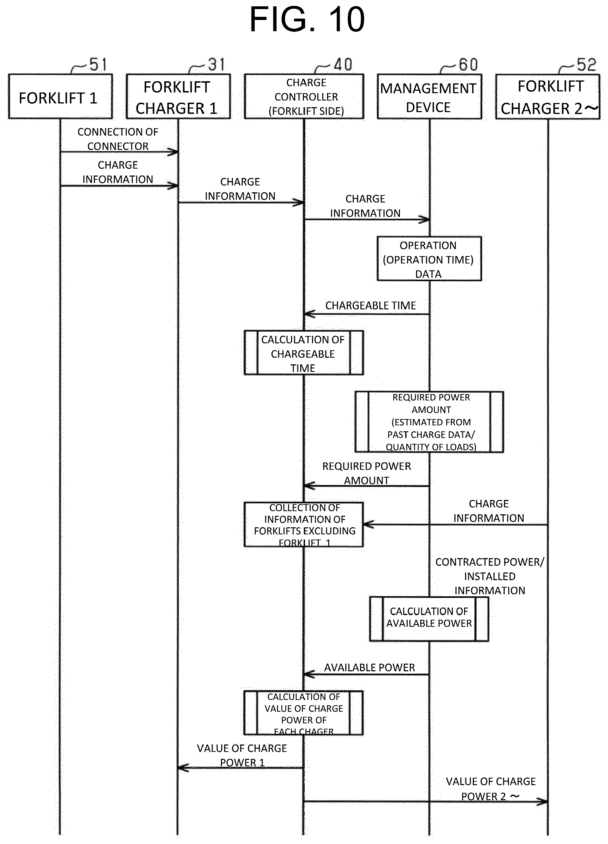

The following will describe an operation of the forklifts, the chargers, one charge controller 40, and the management device 60 by using a flowchart of FIG. 10.

Charge information is transmitted to the chargers from the forklifts, respectively by connecting the forklifts and the chargers through connectors. Furthermore, the charge information is transmitted to the charge controller 40 from the chargers, and then, transmitted to the management device 60 from the charge controller 40. The management device 60 retains operation data (operation time data). A chargeable time is transmitted to the charge controller 40 from the management device 60. The chargeable time is calculated by the chargeable time calculator 48 of the charge controller 40 (see FIG. 2). An amount of required power is estimated from past charge data and a quantity of loads by the management device 60. A value of the required power is transmitted to the charge controller 40 from the management device 60, and charge information is transmitted to the charge controller 40 from the chargers of the other forklifts, that is, the information is collected in the charge controller 40.

The management device 60 retains information of contracted power and installed capacity, and the available power calculator 67 (see FIG. 2) calculates available power. The calculated available power is transmitted to the charge controller 40. The charge power value calculator 46 (see FIG. 2) of the charge controller 40 calculates a value of charge power of each of the chargers. The calculated value of the charge power is transmitted to the charger.

Then, the chargers 31, 32, and 33 charge their corresponding forklifts 51, 52, and 53 at the values of the charge power.

This will be described in detail as follows.

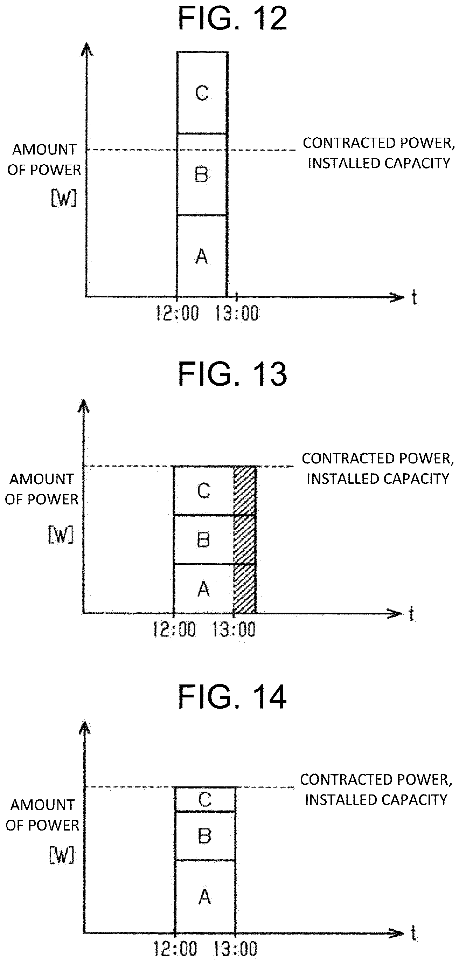

In a conventional workplace where a plurality of electric forklifts are used, as shown in FIG. 12, timings when the forklifts are charged are generally a break time and a time after the work ends. In these times, charge of the plurality of forklifts starts at the same time, so that too much power is used all at once. This causes a fear that the used power surpasses capacities of electric installations (switchboard and electrical wires). In addition, in response to the used power surpassing contracted power concluded with an electricity company, an electricity bill is to be increased.

Thus, it is considered that even if charge of the forklifts starts when the forklift operators have a break time at the same time, a peak of power is suppressed by shifting an actual start time of the charge and limiting charge power, as shown in FIG. 13. However, suppressing the peak of the charge power in accordance with the contracted power and the electric installations may affect an operation of the forklifts during a time zone, for example, a time zone marked by hatching in FIG. 13, during which the forklifts continue to be charged over 13:00 which is the operation start time of the forklifts, since the forklifts are charged from 12:00 to 13:20.

In the present embodiment, charge information of the electric forklifts is transmitted to the management device 60 from one charge controller 40. The management device 60 has a charge information database that includes past data. The management device 60 also includes operation data (operation time and quantity of loads). The management device 60 transmits a prediction of an amount of power that is required for the next operation and information of a chargeable time to the charge controller 40 on the basis of the data stored in the management device 60. The charge controller 40, as shown in FIG. 14, calculates available charge power for charge from information such as contracted power and installed capacity, and calculates a value of charge power of each of the chargers 31, 32, and 33 on the basis of information from the management device 60 in such a manner that the value of charge power is in a range of the available charge power. Then, the charge controller 40 instructs the chargers 31, 32, and 33.

Thus, in FIG. 13, since the forklifts are charged from 12:00 to 13:20, the forklifts continue to be charged over 13:00 that is the operation start time of the forklifts, by which operation of the forklifts may be affected. However, in the present embodiment of FIG. 14, while the peak of charge power is suppressed in accordance with the contracted power and the electric installations by the departmentalizing of the charge so that the vehicle A has a large amount of charge power, while the vehicle C has a small amount of charge power, the forklifts are charged from 12:00 to 13:00. Thus, the present embodiment achieves the suppressing of the power while reducing an effect on the operation of the forklifts.

According to the above embodiment, the following effects may be obtained.
(1) The industrial vehicle charging system 10 includes the plurality of chargers 31, 32, and 33 connected to the grid power supply 30. The industrial vehicle charging system 10 includes the charge controllers 40 that are each configured to instruct the plurality of chargers 31, 32, and 33 on a value of charge power, and the management device 60 configured to receive, via each of the charge controllers 40, charge information of the forklifts 51, 52, and 53 as the industrial vehicles connected to the chargers 31, 32, and 33. Each of the chargers 31, 32, and 33 has the communication unit 35 that receives the charge information (a current SOC, identification information, etc.) from each of the forklifts 51, 52, and 53 connected to the corresponding chargers 31, 32, and 33, and transmits the charge information to one charge controller 40. The management device 60 has the management device storage 65 as the storage that stores a charge schedule (operation time, next charge start time, etc.) of the forklift 51, 52, and 53 and an operation load until the next charge (quantity of loads, production, etc.), and the required charge amount calculator 66 that calculates a required charge amount of each of the forklift 51, 52, and 53 connected to the corresponding chargers 31, 32, and 33 on the basis of the charge schedule, the operation load, and the charge information. The charge controller 40 has the charge power value calculator 46 that calculates the value of the charge power which is transmitted to each of the chargers 31, 32, and 33 on the basis of the required charge amount and at least one of the contracted power, the installed capacity, or the available power. Thus, the industrial vehicle charging system 10 collectively manages the lower level charge controllers 40 by using the upper level management device 60, and calculates the value of the charge power in accordance with the operation load (the required power amount), so that the industrial vehicle charging system 10 may appropriately charge the forklifts. With this configuration, suppressing power is achieved with the industrial vehicle charging system 10 while avoiding the shortage of the charge power (vehicles run out of electricity) and reducing an effect on the operation of the forklifts.
(2) One charge controller 40 further includes the chargeable time calculator 48 that calculates a chargeable time of each of the chargers 31, 32, and 33, and calculates the value of the charge power that is transmitted to each of the chargers 31, 32, and 33 on the basis of the chargeable time. When the upper level management device 60 calculates the value of the charge power, the calculation at the number of times that is equal to the number of the chargers is required. Meanwhile, when the lower level charge controllers 40 perform the calculation, reducing a processing load of the calculation may be achieved compared with the upper level management device 60.
(3) In the Patent Document 1, a controller calculates required power. Meanwhile, in the present embodiment, the industrial vehicle charging system collectively manages the lower level charge controllers 40 by using the upper level management device 60, and the management device which does not perform charge control calculates the required charge amount. That is, the chargers are easily managed due to management not by the charge controller 40 but by the upper level management device 60.
(4) The required charge amount is calculated by using the operation load as well as the operation time. That is, when the industrial vehicles do not have information excluding a travel distance, the industrial vehicles may not estimate operation information (operation time and operation load). However, in the present embodiment, the operation load is calculated by using a quantity of loads and production. The management device has the operation information.

It is noted that a process of FIG. 10 (calculation) is performed every time the forklifts and the chargers are connected to each other. In addition, the relationship between the operation load and the required power amount in FIG. 7 does not change.

The present invention is not limited to the above-described embodiment, and may be modified, for example, as follows.

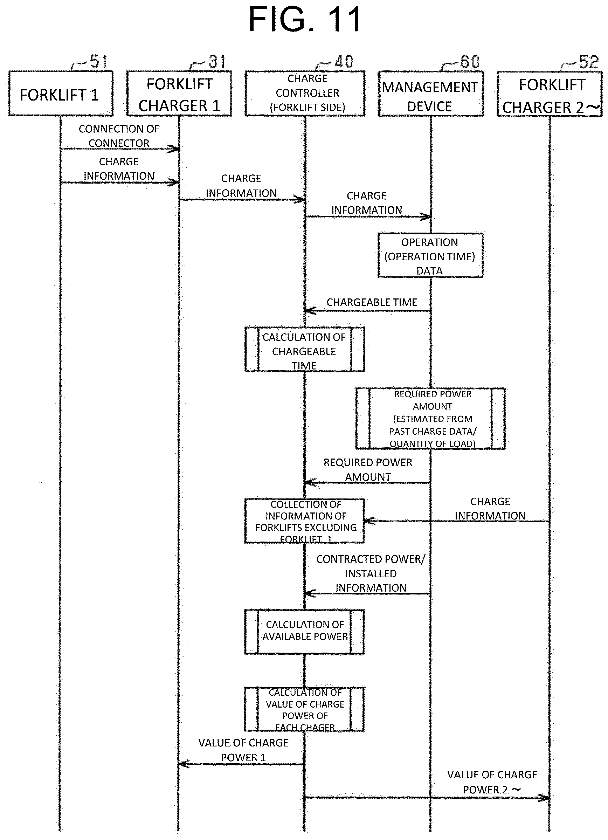

The management device 60 has the available power calculator 67 in FIG. 2. However, the industrial vehicle charging system 10 may have a configuration in which the charge controller 40 has the available power calculator 49 as shown by an imaginary line in FIG. 2. Then, the available power may be calculated by the charge controller 40 as shown in FIG. 11 instead of FIG. 10. In this case, the management device 60 does not need the available power calculator 67.

Thus, the charge controller 40 further includes the available power calculator 49 that calculates the available power in the chargers 31, 32, and 33. Therefore, since power excluding the charge power is grasped by the charge controller 40, this configuration is preferable so as to grasp power of installations excluding the chargers.

Two charge controllers 40 are used in FIG. 1. However, the number of the charge controllers 40 is not limited. The number of the charge controllers 40 may be 1, or 3 or more.

Although the forklifts are used as the industrial vehicles in the present embodiment, the industrial vehicles excluding the forklifts may be used.

### Reference Signs List

10 industrial vehicle charging system
30 grid power supply
31 charger
32 charger
33 charger
35 communication unit
40 charge controller
45 controller storage
46 charge power value calculator
48 chargeable time calculator
49 available power calculator
51 forklift
52 forklift
53 forklift
60 management device
65 management device storage
66 required charge amount calculator

## Claims

1. An industrial vehicle charging system, comprising:
a plurality of chargers connected to a grid power supply;
a charge controller configured to instruct each of the plurality of the chargers on a value of charge power; and
a management device configured to receive, via the charge controller, charge information of an industrial vehicle connected to each of the chargers, wherein
the chargers each have a communication unit that receives the charge information of the industrial vehicle connected to the charger, and transmits the charge information to the charge controller,
the management device has:
a storage that stores a charge schedule of the industrial vehicles and an operation load until the next charge; and
a required charge amount calculator that calculates a required charge amount of the industrial vehicle connected to each of the chargers on the basis of the charge schedule, the operation load, and the charge information, and
the charge controller has a charge power value calculator that calculates the value of the charge power which is transmitted to each of the chargers on the basis of the required charge amount and at least one of contracted power, installed capacity, or available power.

2. The industrial vehicle charging system according to claim 1, wherein
the charge controller further includes an available power calculator that calculates the available power in the chargers.

3. The industrial vehicle charging system according to claim 1 or 2, wherein
the charge controller further includes a chargeable time calculator that calculates a chargeable time of each of the chargers, and calculates the value of the charge power that is transmitted to the charger on the basis of the chargeable time.
